# FASCICULE DE BREVET EUROPEEN

(11) **EP 2 126 888 B1**
(45) Date de publication et mention de la délivrance du brevet: **01.01.2014**
(21) Numéro de dépôt: 08716988.4
(22) Date de dépôt: 20.02.2008
(51) Int. Cl.: G09G 3/36, G02F 1/139

(54) **DISPOSITIF AFFICHEUR A CRISTAL LIQUIDE COMPRENANT DES MOYENS PERFECTIONNES DE COMMUTATION**
FLÜSSIGKRISTALLANZEIGE MIT VERBESSERTEN SCHALTMITTELN
LIQUID CRYSTAL DISPLAY WITH IMPROVED SWITCHING MEANS

(30) Priorité: 21.02.2007 FR 0753398; 02.03.2007 FR 0753626
(43) Date de publication de la demande: 02.12.2009
(73) Titulaire: France Brevets, 75009 Paris (FR)
(72) Inventeur: MARTINOT-LAGARDE, Philippe, F-91460 Marcoussis (FR); JOLY, Stéphane, F-72650 Saint Saturnin (FR); LAFFITTE, Jean Denis, F-91310 Leuville Sur Orge (FR)
(74) Mandataire: Joubert, Cécile
(86) Numéro de dépôt international: PCT/EP2008/052080
(87) Numéro de publication internationale: WO 2008/101967

(56) Documents cités:
- WO-A-03/090197
- WO-A-2004/104980
- FR-A1- 2 874 446
- FR-A1- 2 874 447
- DOZOV I ET AL: "Nemoptic's bistable nematic liquid-crystal technology" INFORMATION DISPLAY, PALISADES INSTITUTE FOR RESEARCH SERVICES, NEW YORK, NY, US, janvier 2002 (2002-01), pages 10-12, XP002216407 ISSN: 0362-0972

## Description

### DOMAINE TECHNIQUE

La présente invention concerne le domaine des afficheurs à cristaux liquides.

Plus précisément, la présente invention concerne les afficheurs bistables à cristaux liquides nématiques. Elle s'applique en particulier aux afficheurs bistables à cristaux liquides nématiques dont deux textures stables diffèrent par une torsion d'environ 180°.

### BUT DE L'INVENTION

Le but de la présente invention est d'améliorer les performances des dispositifs d'affichage bistable. En particulier l'invention a pour but d'améliorer, par l'utilisation de nouveaux moyens, la commutation d'états au niveau des bords des pixels.

### ETAT DE LA TECHNIQUE

### Afficheurs LCD classiques

Les afficheurs à cristaux liquides les plus répandus utilisent un cristal liquide de type nématique. Ils sont constitués d'une couche de cristal liquide placée entre deux lames. Chaque lame comporte un substrat, souvent en verre, sur lequel ont été déposées une électrode conductrice puis une couche dite d'ancrage également appelée couche d'alignement. La couche d'ancrage exerce, sur les molécules de cristal liquide voisines, un couple de rappel qui tend à les orienter parallèlement à une direction nommée axe facile. Les couches d'ancrage sont souvent réalisées par un dépôt de polymère brossé pour créer la direction de l'axe facile. Celle-ci est le plus souvent très proche de la direction de brossage.

L'épaisseur de la cellule ainsi constituée est rendue constante en répartissant, entre les lames, des billes dont le diamètre est égal à l'épaisseur souhaitée (typiquement de 1 à 6 µm).

La plupart des dispositifs à base de cristaux liquides proposés et réalisés à ce jour sont monostables. En l'absence de champ électrique, le cristal liquide est orienté selon une seule texture. Elle correspond à un minimum absolu de l'énergie élastique du cristal liquide dans la cellule, compte tenu des ancrages sur les deux lames. Sous champ électrique, cette texture est déformée continûment et ses propriétés optiques varient en fonction de la tension appliquée. Près des lames, les couches d'ancrage dite « couches d'ancrage fort » maintiennent la direction des molécules. Leur direction varie peu. A la coupure du champ, le nématique est rappelé par les ancrages sur les deux lames. Il revient selon la texture stable. Le dispositif est monostable. L'homme de l'art reconnaîtra le mode de fonctionnement des afficheurs nématiques les plus répandus : nématiques tordus (TN), supertordus (STN), à biréfringence électriquement contrôlée (ECB), nématiques verticalement alignés (VAN), etc. Au niveau de l'adressage, ces afficheurs peuvent être adressés directement (très faible résolution), en mode multiplexé (résolution moyenne) ou en mode actif (haute résolution).

### État de la technologie BiNem

Une nouvelle génération d'afficheurs nématiques, dits « bistables », est apparue depuis quelques années : ils fonctionnent par commutation entre deux états, stables en l'absence de champ électrique. Le champ électrique externe n'est appliqué que pendant le temps nécessaire pour faire commuter d'un état à l'autre la texture du cristal liquide. En l'absence de signal électrique de commande, l'afficheur reste en l'état obtenu. Par son principe de fonctionnement, ce type d'afficheur consomme une énergie proportionnelle au nombre de changements d'images. Ainsi, quand la fréquence de ces changements diminue, la puissance nécessaire pour le fonctionnement de l'afficheur tend vers zéro.

### Principe de fonctionnement

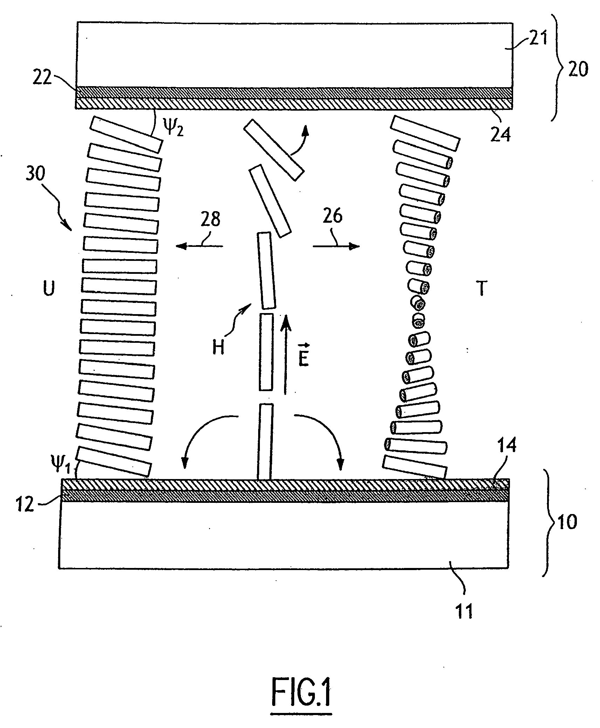

L'afficheur bistable dénommé BINEM [I], [2] est présenté schématiquement sur la figure 1. Il utilise deux textures, l'une uniforme ou faiblement tordue U (illustrée sur la gauche de la figure 1) dans laquelle les molécules sont sensiblement parallèles entre elles, et l'autre T (illustrée sur la droite de la figure 1) qui diffère de la première par une torsion d'environ +/- 180°, ceci à +/- 15° près. La couche de cristal liquide 30 est placée entre deux lames 20 et 10, que l'on appelle lame maître et lame esclave. La lame maître 20 comporte un substrat 21, une électrode 22 et une couche d'ancrage 24 réalisant un ancrage azimuthal et zénithal fort du cristal liquide, avec un « prétilt » ou pré-inclinaison par rapport à la surface de la lame 20, dont la valeur ψ*₂* est classique, proche de 5°. La lame esclave 10 comporte un substrat 11, une électrode 12 et une couche d'ancrage 14 réalisant un ancrage zénithal faible, un ancrage azimuthal moyen ou fort du cristal liquide et un « prétilt » très faible (ψ*₁* << 1° [3],[8]). Les deux prétilts ψ*₁* et ψ*₂* sont dans le même sens, c'est à dire que, dans la texture U, les molécules de cristal liquide restent inclinées selon le même signe d'inclinaison sur toute l'épaisseur de la cellule. Les électrodes habituellement transparentes 12 et 22 déposées sur les substrats 11 et 21 permettent d'appliquer un champ électrique perpendiculaire aux lames 10 et 20.

L'adjonction de polariseurs sur chacun des substrats 11 et 21 à l'extérieur de la cellule permet d'associer à chaque texture un état optique, par exemple sombre pour U et clair pour T ou inversement, en fonction des angles des deux polariseurs par rapport aux directions d'ancrage.

Le nématique est chiralisé avec un pas spontané *pₒ,* choisi proche de quatre fois l'épaisseur d de la cellule, pour égaliser les énergies des deux textures précitées. Le rapport entre l'épaisseur d de la cellule et le pas spontané *p*ₒ, soit *d*/*pₒ,* est donc environ égal à 0,25 +/- 0,1. Sans champ, les états T et U sont les états d'énergie minimale : la cellule est bistable.

Sous fort champ électrique une texture presque homéotrope, dénommée H et illustrée au milieu de la figure 1, est obtenue. Au voisinage de la surface de la lame esclave 10, les molécules lui sont perpendiculaires, l'ancrage zénithal est dit « cassé ». On appelle tension de cassure *V_{cass}* la tension électrique correspondant à la cassure de l'ancrage zénithal sur la lame esclave 10. Nous adopterons dans tout le document la dénomination cassure d'ancrage pour qualifier la cassure d'ancrage zénithale.

Cette tension Vcass correspond à un champ électrique de cassure tel que Vcass = Ecass.d. Typiquement Ecass est compris entre 5 et 15V/µm à température ambiante, pour une couche d'ancrage zénithal faible telle que la lame esclave 10.

A la coupure du champ électrique, la cellule évolue vers l'une ou l'autre des textures bistables U et T (voir figure 1). Lorsque les signaux de commande utilisés induisent un fort écoulement du cristal liquide au voisinage de la lame maître 20, le couplage hydrodynamique 26 entre la lame maître 20 et la lame esclave 10 induit la texture T. Dans le cas contraire, la texture U est obtenue par couplage élastique 28 entre les deux lames 10 et 20, aidé par l'inclinaison éventuelle de l'ancrage faible [1], [2].

Dans la suite on désignera par « commutation » d'un élément d'écran BiNem le fait de faire passer les molécules du cristal liquide par l'état homéotrope H (cassure d'ancrage), puis de les laisser évoluer ensuite, à la coupure du champ électrique vers une des deux textures bistables U ou T ou vers une coexistence de ces textures. La coupure du champ électrique correspond à un front descendant de la tension appliquée (diminution de la tension électrique en valeur absolue), qui sera appelé front descendant actif lorsque ce front descendant est celui qui permet, en fonction de ses caractéristiques, de choisir l'état final en terme de texture (la tension pixel peut être multiplateau [6], et seul un des fronts descendants est le front actif).

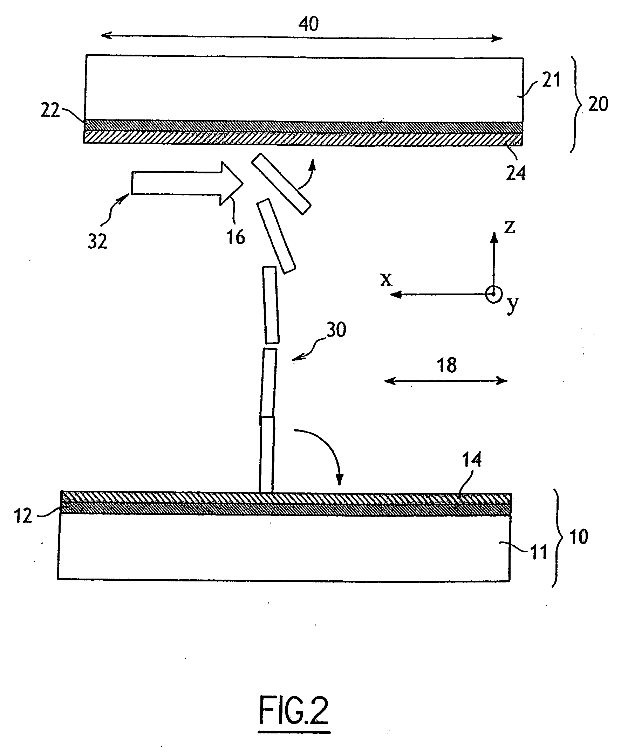

Le couplage hydrodynamique [4] entre lame esclave 10 et lame maître 20 est lié à la viscosité du cristal liquide. A l'arrêt du champ électrique appliqué à la zone considérée, le retour à l'équilibre des molécules ancrées sur la lame maître 20 crée un écoulement de chute 32 près de la lame maître 20, dont le sens 16 est indiqué sur la figure 2. La viscosité fait diffuser l'écoulement de chute 32 dans toute l'épaisseur de la cellule en moins d'une microseconde. Si l'écoulement de chute 32 est assez fort près de la lame esclave 10, il y incline les molécules dans la direction qui induit la texture T. Les molécules tournent en sens inverse sur les deux lames 10 et 20. Le retour à l'équilibre des molécules près de la lame esclave 10 est un deuxième moteur de l'écoulement, il le renforce et aide au passage homogène du pixel en texture T . Ainsi le passage de la texture sous champ H à la texture T est obtenu grâce à l'écoulement de chute 32, donc au déplacement du cristal liquide dans le sens 16 où est incliné l'ancrage des molécules sur la lame maître 20 (voir figure 2), le long d'une direction 18. Cette direction 18 de l'écoulement de chute proche de la lame maître est sensiblement parallèle à la direction de brossage de sa couche d'alignement, laquelle est référencée 40 sur la figure 2. Elle peut ne pas lui être strictement parallèle du fait par exemple de la torsion de la texture de départ. Typiquement elle lui est parallèle à environ +/- 10°.

Le couplage élastique entre les deux lames 10, 20 donne une très légère inclinaison des molécules près de la lame esclave 10, dans la texture H sous champ, même si le champ appliqué tend à les orienter perpendiculairement aux lames. En effet l'ancrage fort incliné sur la lame maître 20 maintient inclinées les molécules adjacentes. L'inclinaison près de la lame maître 20 est transmise par l'élasticité d'orientation du cristal liquide jusqu'à la lame esclave 10. Sur la lame esclave 10, l'ancrage et une éventuelle inclinaison de l'axe facile de celui-ci amplifient l'inclinaison des molécules [5]. Quand, à l'arrêt du champ, le couplage hydrodynamique est insuffisant pour lutter contre l'inclinaison résiduelle des molécules près de la lame esclave 10, les molécules près des deux lames 10 et 20 reviennent à l'équilibre en tournant dans le même sens : la texture U est obtenue. Ces deux rotations sont simultanées : elles induisent des écoulements en sens inverse qui se contrarient. Le débit total est pratiquement nul. Il y a donc très peu de déplacement global du cristal liquide pendant le passage de la texture H à la texture U.

La commutation en U ou en T du pixel est fonction de l'intensité de l'écoulement de chute 32 créé par la lame maître 20 : cet écoulement diffuse vers la lame esclave 10, et l'intensité de l'écoulement obtenue au voisinage de la lame esclave 10 détermine la texture finale obtenue (U ou T). Pour obtenir un écoulement de chute 32 important induisant la texture T, il faut appliquer une impulsion de champ électrique à flanc de descente raide, par exemple un signal de type créneau. Pour obtenir la texture U, une impulsion de champ électrique à flanc de descente lente générant un très faible écoulement de chute est nécessaire, par exemple une descente en pente douce ou par sauts successifs entre des plateaux [1],[2],[6].

Il est également possible d'obtenir des niveaux de gris dans un pixel en maîtrisant l'intensité de l'écoulement de chute via la variation de tension aux bornes du pixel. Pour une valeur donnée de cette variation de tension, on obtient au sein d'un même pixel une fraction de sa surface en texture T et l'autre fraction en texture U. A une autre valeur de variation de tension et donc de cet écoulement de chute correspond un rapport différent entre les surfaces occupées par les deux textures U et T. Des niveaux de gris sont ainsi obtenus [9].

Le fait que la commutation soit directement reliée à l'intensité de l'écoulement près d'une des lames 10 et 20 est une caractéristique spécifique des afficheurs BiNem, les afficheurs classiques TN et STN ne commutent pas selon ce principe.

### Adressage

Les 3 modes d'adressage développés pour les cristaux liquides standards (direct, multiplexé, actif) peuvent être utilisés pour l'afficheur BiNem. Le mode d'adressage le plus commun de l'afficheur BiNem est l'adressage passif multiplexé, mais un adressage actif à l'aide de transistors en couches minces est également possible [7]. Dans les modes multiplexés actif et passif, l'afficheur BiNem est un écran matriciel formé de n fois m éléments d'écran appelés pixels, n étant le nombre de lignes et m le nombre de colonnes, et l'adressage s'effectue ligne par ligne.

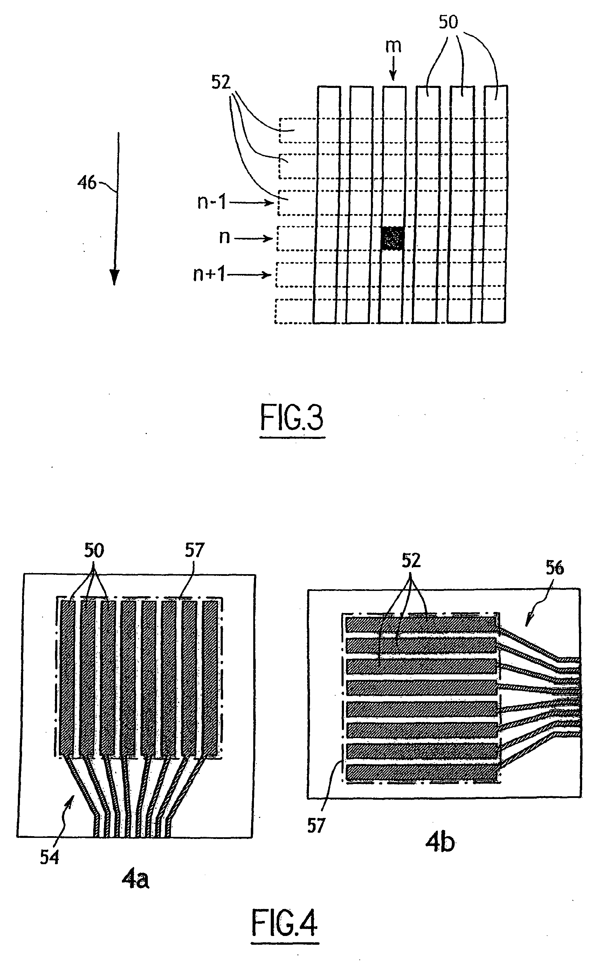

Dans le mode passif multiplexé, chaque pixel est constitué par l'intersection d'une bande conductrice ligne 52 et d'une bande conductrice colonne 50 ; ces bandes perpendiculaires sont déposées respectivement sur les lames maître 20 et esclave 10 (voir figure 3). La zone située entre deux bandes conductrices adjacentes portées par un même substrat 11 ou 21 est appelée espace interpixel. La zone constituée de l'ensemble des pixels est appelée zone matricielle. Habituellement dans l'état de la technique, la zone matricielle correspond à la zone d'affichage, zone sur laquelle on affiche le contenu de l'image que l'on souhaite visualiser. En dehors de la zone matricielle, les bandes conductrices précitées 50, 52 se transforment en pistes 54, 56 qui réalisent la connexion aux circuits de commande appelés drivers situés par exemple sur des éléments de connexion flexibles soudés à l'écran. Pour afficher le pixel de coordonnées (n, m) on applique un signal ligne sur la ligne n et un signal colonne sur la colonne m.

Un schéma de principe des électrodes formées sur les deux substrats de verre 11 et 21 d'un afficheur classique conforme à l'état de la technique est illustré figure 4. Généralement, les électrodes conductrices sont réalisées avec un matériau conducteur transparent appelé ITO (Oxyde mixte d'Indium et d'Étain). Mais lorsque l'afficheur est réflectif, les électrodes situées sur le côté opposé à l'observateur peuvent être réalisées avec un matériau conducteur opaque, par exemple en aluminium. Pour exécuter les électrodes, une couche conductrice mince est déposée sur les deux substrats 11 et 21 puis gravée selon la conformation recherchée. La figure 4a illustre le masque permettant de graver les électrodes 50 sur le substrat dit supérieur 21, dans notre exemple les colonnes. La figure 4b illustre le masque permettant de graver les électrodes 52 sur le substrat dit inférieur 11, dans notre exemple les lignes. Sur les figures 4a et 4b, on a ainsi référencé 50 les bandes formant les électrodes colonnes et 52 les bandes formant les électrodes lignes (ces bandes assurent l'adressage de la zone utile), puis 54 et 56 les pistes assurant la connexion des bandes précitées 50 et 52 aux drivers. Les limites de la zone matricielle correspondent au cadre en traits mixtes référencé 57 sur les figures 4a et 4b. Les deux zones 57 illustrées sur les figures 4a et 4b sont superposées lors de l'assemblage et du scellement de la cellule.

Dans le mode d'adressage actif, généralement l'un des substrats porte une matrice d'électrodes de pixels individualisées et isolées, agencées en un réseau organisé en lignes et colonnes, tandis que sur l'autre substrat l'électrode peut être continue. Cette dernière est habituellement portée à un potentiel constant que nous nommerons potentiel de référence. Le signal électrique de commande est amené respectivement sur chaque électrode de pixel du premier substrat par des pistes conductrices très fines. Celles-ci sont disposées selon les lignes et les colonnes sur le même substrat. Elles se croisent sans être en contact. Près de l'intersection de chaque piste ligne et chaque piste colonne, un élément actif est positionné, tel un transistor. Dans ce cas, habituellement, la piste ligne est reliée à la borne de commande du transistor, l'électrode du pixel et la piste colonne étant reliées aux deux autres bornes principales du transistor.

### Pilotage d'un afficheur BiNem en mode multiplexé

Lorsque la structure de l'afficheur est matricielle comme décrit précédemment, l'adressage s'effectue ligne par ligne. Lorsque l'on souhaite inscrire une ligne donnée n, un signal électrique est appliqué sur cette ligne qui alors est dite « activée ». Nous appellerons ce signal d'activation VL. Pour le BiNem, on distingue deux phases pendant l'activation : la première phase consiste essentiellement à obtenir une cassure d'ancrage, c'est à dire la texture homéotrope sur la ligne considérée, en appliquant par exemple une tension V1 sur le signal ligne (V1>Vcass), ce qui constitue un premier plateau de VL. Pendant la deuxième phase, un signal V2 est appliqué sur la ligne par exemple V2 ≤ V1, ce qui constitue un deuxième plateau de VL, et des signaux électriques dits «data» appelés Vc sont appliqués simultanément sur toutes les colonnes. Le front de descente du signal data Vc est synchronisé avec le front de descente du deuxième plateau du signal d'activation ligne [1]. Selon la valeur et/ou la forme et/ou la durée du signal Vc appliqué à chacune des colonnes, la texture U ou T est obtenue dans le pixel correspondant à l'intersection de cette colonne et de la ligne activée [6]. Puis la ligne suivante est à son tour activée, les autres lignes étant non activées et ainsi de suite de la première à la dernière ligne de l'afficheur. Le temps entre la fin d'activation d'une ligne et le début de l'activation de la ligne suivante est appelé temps interligne t_{L}. Ce temps est typiquement compris entre 50 µs et 10 ms. La valeur de ce temps est très importante pour obtenir une bonne commutation, et varie sensiblement avec la température. Dans tous les cas, le temps t_{L} >0. Nous appellerons cet adressage «adressage en une étape». L'ordre d'activation des lignes (d'abord n-1, puis n, puis n+1) défmit le sens de balayage 46 (figure 3).

Le document [9] décrivant la réalisation de niveaux de gris prévoit trois variantes d'obtention de niveaux de gris (figure 23 du document [9]). Une première variante consiste à faire varier l'amplitude du signal colonne Vc appliqué au pixel P. Une deuxième variante consiste à faire varier la durée du signal colonne Vc appliqué au pixel P. Dans ces deux variantes le front de descente du signal colonne est synchronisé avec le front de descente du deuxième plateau du signal ligne. Une troisième variante appelée «modulation de phase», consiste en la variation de la synchronisation du signal colonne Vc avec le front de descente du deuxième plateau du signal d'activation ligne.

Une des différences importantes à noter entre le mode passif et le mode actif est que dans le mode passif multiplexé, quand une ligne p n'est pas activée, chacun des pixels de cette ligne p est soumis aux signaux colonnes correspondant aux data des autres pixels de sa colonne, appliqués lors de l'activation de la ligne à laquelle ils appartiennent. Autrement dit, lorsque la ligne n du pixel P(n,m) est activée par un signal VL(n) et qu'un signal Vc(m) est envoyé sur la colonne m de ce pixel afin de générer le signal pixel Vp = VL(n)-Vc(m), tous les pixels de la colonne m sont soumis simultanément à Vc(m). Dans l'adressage actif, lors de l'activation d'une ligne, les signaux colonnes ne sont appliqués qu'aux pixels de cette ligne ; les transistors des lignes non activées ne sont pas conducteurs, leurs pixels ne reçoivent pas de signal.

Selon un mode préférentiel connu mais non limitatif de pilotage, préalablement à l'adressage ligne à ligne, on effectue de manière collective l'adressage complet de l'écran ou d'une partie de l'écran dans une texture donnée, habituellement T, en activant simultanément toutes les lignes ou un groupe de lignes. Les lignes sont ensuite adressées une par une, selon la méthode de multiplexage classique, pour afficher l'image voulue. Cet «adressage en deux étapes» permet de mieux maîtriser la commutation des pixels en particulier pour le contrôle des niveaux de gris, car ainsi les pixels partent d'un état bien défini au début de la deuxième étape.

Selon un mode préférentiel connu mais non limitatif de réalisation d'un afficheur BiNem, la direction de brossage des couches d'alignement est orthogonale à la direction des lignes de l'afficheur, ce type d'afficheur est dit « à brossage orthogonal ».

### Limitations présentées par les afficheurs BiNem réalisés selon l'état de la technique:

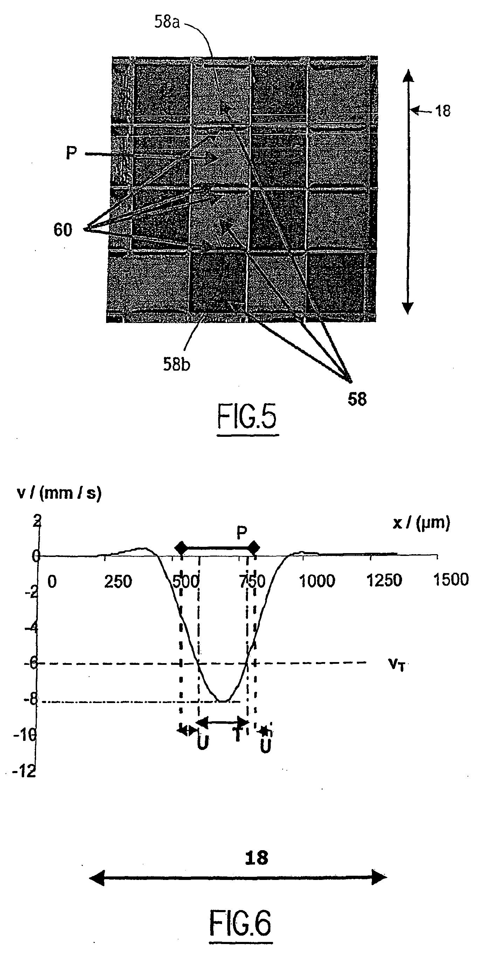

Les inventeurs ont constaté que l'utilisation de l'écoulement pour effectuer la commutation d'un pixel P a pour conséquence que la commutation du pixel P est également sensible aux écoulements créés dans les pixels voisins lors de l'adressage, écoulements qui diffusent dans le pixel à commuter. L'interaction de ces écoulements dus aux pixels voisins avec l'écoulement intrinsèque du pixel P perturbe la commutation du pixel P. On définit les pixels voisins de P comme les pixels susceptibles de perturber sa commutation par leurs écoulements, donc les pixels 58 situés de part et d'autre du pixel P dans la direction de l'écoulement 18 (figure 5). Lorsque la direction de brossage 40 est orthogonale aux lignes, la direction de l'écoulement 18 est globalement parallèle à la direction de brossage. Les pixels voisins au sens de l'écoulement sont les pixels situés de part et d'autre de P sur sa colonne m. Lorsque la direction de brossage est quelconque, les pixels voisins sont ceux situées de part et d'autre de P selon la direction de l'écoulement, globalement parallèle (à +/-10°) à la direction de brossage.
Lorsque sont considérés tous des pixels d'une ligne n, l'ensemble de leurs voisins sont situés, et ce quelque soit la direction de brossage, sur les lignes adjacentes à la ligne n, soit en amont les lignes n-1, n-2 ... et en aval les lignes n+1,n+2.... On parlera alors de lignes voisines de la ligne n (au sens de l'écoulement).

### Exemple de perturbation par les voisins : «effet de bord ».

Lors de l'adressage des afficheurs BiNem, sur deux des bords des pixels que l'on cherche à commuter en texture T, peut apparaître un domaine qui commute en U. Ce défaut est net sur la figure 5, sur des pixels commutés en T ; on voit sur ces pixels, par exemple le pixel P, que leurs bords 60 perpendiculaires au brossage, donc à la direction des écoulements 18, ont commuté en U au lieu de commuter en T. Sur la figure 5, les pixels commutés en T sont illustrés en clair, tandis que les pixels commutés en U sont illustrés en foncé.

Les inventeurs ont déterminé après de longues analyses que ces défauts s'expliquent par le fait que l'écoulement créé par le retour à l'équilibre des molécules près de la lame maître 20 est freiné au bord amont et au bord aval du pixel P. Le départ du liquide en amont de l'écoulement dans le pixel P crée une dépression dans le pixel voisin précédent 58a. Son arrivée en aval crée une surpression dans le pixel voisin suivant 58b. Ces deux effets freinent globalement l'écoulement dans tout le pixel P. Mais ils sont surtout importants aux deux bords précités 60 du pixel P, là où s'arrête le moteur de l'écoulement. Juste aux bords 60 du pixel P, la vitesse peut être par deux fois plus faible qu'au centre de celui-ci. Dans ces conditions le bord 60 du pixel P peut ne jamais commuter en T, quelle que soit la chute de tension du signal sur ce pixel.

La figure 6 explicite ce phénomène. Elle présente en fonction de x (qui correspond à un axe d'abscisse parallèle à la direction 18), la moyenne en z (axe perpendiculaire aux lames 11 et 21 - voir figure 2) de la vitesse selon x (vitesse moyenne) de l'écoulement de chute à l'arrêt d'un signal créneau appliqué au pixel P d'amplitude Vp = 20 Volts. Aucun autre signal n'est appliqué à l'afficheur. La valeur négative de la vitesse signifie un écoulement de chute en sens inverse de x, donc selon le sens 16 (figure 2). Sur la figure 6, v_{T} représente la vitesse minimum de l'écoulement de chute nécessaire à la commutation vers T. On voit sur la figure 6 qu'aux bords de P situés selon la direction 18, la valeur absolue de la vitesse v de l'écoulement de chute est inférieure à v_{T}. Ces bords commutent donc en U.

### DESCRIPTION DE L'INVENTION

La présente invention a pour objectif de remédier aux inconvénients précités constatés lors de la mise en oeuvre des afficheurs connus de l'état de la technique.

Cet objectif est atteint dans le cadre de la présente invention grâce à un procédé de commande d'un afficheur à cristal liquide nématique bistable à cassure d'ancrage à adressage actif, ledit afficheurs comprenant deux textures cristal liquide stables, l'une uniforme ou faiblement tordue (U) dans laquelle les molécules sont sensiblement parallèles entre elles et l'autre à torsion (T) qui diffère de la première par une torsion d'environ +/- 180° à +/- 15° près et comprenant une matrice de pixels agencés en lignes, indice n, et en colonnes, indice m, croisées, chaque pixel (P, n ,m) étant situé à l'intersection d'une ligne n et d'une colonne m, et dans lequel une commutation d'état des molécules de cristal liquide d'un pixel P vers une texture choisie pouvant être uniforme ou faiblement tordue (U), ou à torsion (T), ou une coexistence des deux textures définissant un niveau de gris, est pilotée par application d'un signal électrique de commande entre deux électrodes encadrant chaque pixel comprenant une tension supérieure à la tension de cassure d'ancrage puis un front descendant actif permettant l'obtention de ladite texture choisie, fait intervenir un écoulement selon une direction déterminée (18) proche de la direction de brossage (40), ladite direction de brossage de l'afficheur étant perpendiculaire aux lignes, l'adressage des pixels étant en deux étapes constituées d'une première étape dans laquelle on effectue de manière collective l'adressage d'au moins une partie de l'écran dans la texture unique à torsion (T), suivie d'une deuxième étape d'adressage ligne à ligne de ladite partie de l'écran, caractérisé par le fait qu'il comprend, pour contrôler la commutation de certains au moins des pixels (P,n,m), une étape consistant à appliquer sur au moins un pixel (58) voisin selon la direction d'écoulement d'un pixel (P,n,m) dont la commutation doit être contrôlée par le signal électrique de commande, ledit pixel voisin (n+1,m) étant situé sur la même colonne m que le pixel (P,n,m) à commuter et sur la ligne suivante, des signaux électriques auxiliaires correspondants à des signaux appliqués sur l'électrode de colonne m, adaptés pour induire dans ledit pixel voisin un écoulement auxiliaire parallèle à ladite direction (18), lesdits signaux auxiliaires étant appliqués lors de la deuxième étape d'adressage de la ligne n du pixel (P,n,m) à commuter vers une texture choisie, et dont les fronts montants ou descendants sont temporellement placés en avance ou en coïncidence par rapport au front descendant actif du signal électrique de commande du pixel P, avec un décalage temporel compris entre 0 et quelques dizaines de microsecondes, à température ambiante, de manière à favoriser la commutation vers une texture choisie dudit pixel à contrôler(P)

Selon une autre caractéristique avantageuse de la présente invention le décalage temporel d'un front des signaux électriques auxiliaires par rapport au front descendant actif du signal électrique de commande est typiquement entre 0 et 50 µs, de préférence entre 0 et 10 µs, très préférentiellement entre 5 µs et 10 µs.

La présente invention concerne également les afficheurs à cristaux liquides mettant en oeuvre le procédé précité.

Pour contrôler la commutation d'un pixel P, l'invention consiste ainsi essentiellement à appliquer, sur un ou plusieurs pixels situés d'un côté, de l'autre ou de part et d'autre du pixel P dans la direction de l'écoulement 18 (pixels voisins 58), des signaux électriques auxiliaires à un instant bien défini par rapport au signal de commutation de P. Le mouvement des molécules créé par ces signaux électriques auxiliaires dans les pixels voisins induit dans le pixel P un écoulement auxiliaire qui permet de maîtriser la commutation du pixel P.

Le signal auxiliaire peut être envoyé sur les pixels voisins au moyen des électrodes de lignes ou des électrodes de colonnes ou des deux types d'électrodes.

Le signal électrique auxiliaire appliqué à un pixel voisin a préférentiellement mais non limitativement la forme d'un créneau, monopolaire ou bipolaire. Comme nous le verrons plus loin, à sa montée (front montant caractérisé par une augmentation en valeur absolue de la tension), il induit un écoulement fort qui favorise le passage en U du pixel qui commute, à condition que ce front montant soit placé au bon instant par rapport au signal pixel. A sa descente (front descendant caractérisé par une diminution en valeur absolue de la tension), il induit un écoulement plus faible mais suffisant pour aider le passage en T du pixel qui commute, à condition là encore que ce front descendant soit placé au bon instant par rapport au signal pixel.

Dans le cas de l'affichage matriciel passif, au moment de l'adressage d'une ligne, le signal colonne est appliqué sur tous les pixels de chaque colonne. Dans le cas du brossage orthogonal, les pixels de la colonne m sont les pixels voisins 58 tels que définis précédemment pour le pixel P(n,m). Le signal auxiliaire peut alors être fourni par un signal sur la colonne m correctement placé temporellement. Il peut cependant être utile de contrôler l'amplitude du signal auxiliaire en appliquant également un signal sur les lignes voisines de la ligne activée.

On peut également appliquer un signal auxiliaire aux pixels voisins 58 en appliquant un signal sur les lignes correspondant à ces pixels voisins (lignes n-1, n-2 , n+1, n+2 ...).

Dans le cas d'affichage matriciel actif avec brossage orthogonal, l'invention est plus facile à mettre en oeuvre que pour l'adressage passif : le signal auxiliaire peut être appliqué uniquement sur les lignes voisines nécessaires indépendamment du signal de commutation car les lignes sont ouvertes individuellement.

### AVANTAGES DE L'INVENTION

Un premier avantage de l'utilisation de signaux électriques auxiliaires conformes à la présente invention est l'augmentation de la vitesse d'adressage d'un écran en diminuant le temps consacré à l'adressage de chaque ligne.

Un deuxième avantage de la présente invention est de diminuer voire de rendre négatif le temps d'adressage entre chaque ligne.

Un troisième avantage de la présente invention est le contrôle amélioré de la proportion de chaque texture dans un même pixel lorsque l'on souhaite réaliser de cette manière un niveau de gris dans ce pixel.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 montre le principe de fonctionnement connu d'un afficheur bistable de type BiNem,
- la figure 2 représente l'écoulement de chute permettant le passage en texture T dans un tel afficheur,
- la figure 3 illustre le principe d'adressage passif multiplexé classique,
- la figure 4 illustre le schéma de principe connu d'électrodes formées sur les deux substrats de verre d'un afficheur. La figure 4a illustre un masque permettant de graver les électrodes sur le substrat dit supérieur, tandis que la figure 4b illustre le masque permettant de graver les électrodes sur le substrat dit inférieur,
- la figure 5 illustre la présence d'un effet de bord (texture U) constatée sur un afficheur classique lors de la commutation de pixels en texture T, ,
- la figure 6 présente la moyenne en z de la vitesse selon x (vitesse moyenne v) en fonction de x, de l'écoulement de chute à l'arrêt d'un signal créneau appliqué à un pixel P d'amplitude V_{P} = 20 Volts,
- la figure 7 indique sur la figure 7a les différents endroits 1, 2, 3 et 4 pour lesquels sont effectuées les simulations présentées sur la figure 8 pour un signal auxiliaire appliqué tel que représenté sur la figure 7b,
- la figure 8 présente la variation de la vitesse moyenne v (moyenne en z de la vitesse selon x) du cristal liquide en fonction du temps, aux 4 endroits 1 2 3 et 4 répertoriés sur la figure 7a,
- la figure 9 montre en fonction du temps, sur la figure 9a, la vitesse moyenne v induite au milieu d'un pixel P par un créneau auxiliaire Vaux illustré sur la figure 9b,
- la figure 10 montre, sur la figure 10a, la vitesse moyenne v au milieu des pixels voisins en fonction du temps pour plusieurs valeurs de la tension quadratique moyenne Vrms appliquée sur les pixels voisins avant l'application de la tension auxiliaire illustrée sur la figure 10b,
- la figure 11 illustre sur la figure 11a un signal auxiliaire de lever sous la forme d'un petit signal créneau de quelques volts appliqué aux pixels voisins via les lignes correspondantes quelques µs avant la descente du signal de commutation Vp appliqué au pixel P via sa ligne uniquement et illustré sur la figure 11b,
- la figure 12 montre l'amplitude de l'écoulement auxiliaire empêchant le passage en T à la chute de tension de Vp à 0. Le diagramme est tracé pour des chutes de tension supérieures de ΔV à la chute minimum de V_{T} induisant le passage en T sans écoulement auxiliaire. L'écoulement auxiliaire est généré par le signal auxiliaire de lever représenté sur la figure 11.
- la figure 13 présente la vitesse moyenne au milieu du pixel P en fonction du temps pendant le lever par un échelon de 20 Volts, On remarque que l'écoulement positif de lever est suivi par un écoulement négatif de retour alors que le champ électrique reste appliqué et donc que les molécules levées ne tournent pratiquement plus.
- la figure 14 illustre sur la figure 14a les signaux ligne et respectivement sur les figures 14b et 14c les signaux colonne propres à générer une commutation en U ou en T, correspondant à un troisième exemple de l'invention, qui sera décrit par la suite,

### DESCRIPTION DETAILLEE DE L'INVENTION

On va par la suite expliciter les études conduites par les inventeurs, à la base de l'invention, avant de présenter différents exemples de mise en oeuvre de celle-ci.

### Etude de l'écoulement issu des pixels voisins

Nous allons à présent expliciter la manière dont un écoulement issu d'un pixel voisin ou écoulement auxiliaire, diffuse dans un pixel à commuter, en partant à titre d'exemple de pixels mis tous préalablement dans l'état T :

### a) effet de la distance

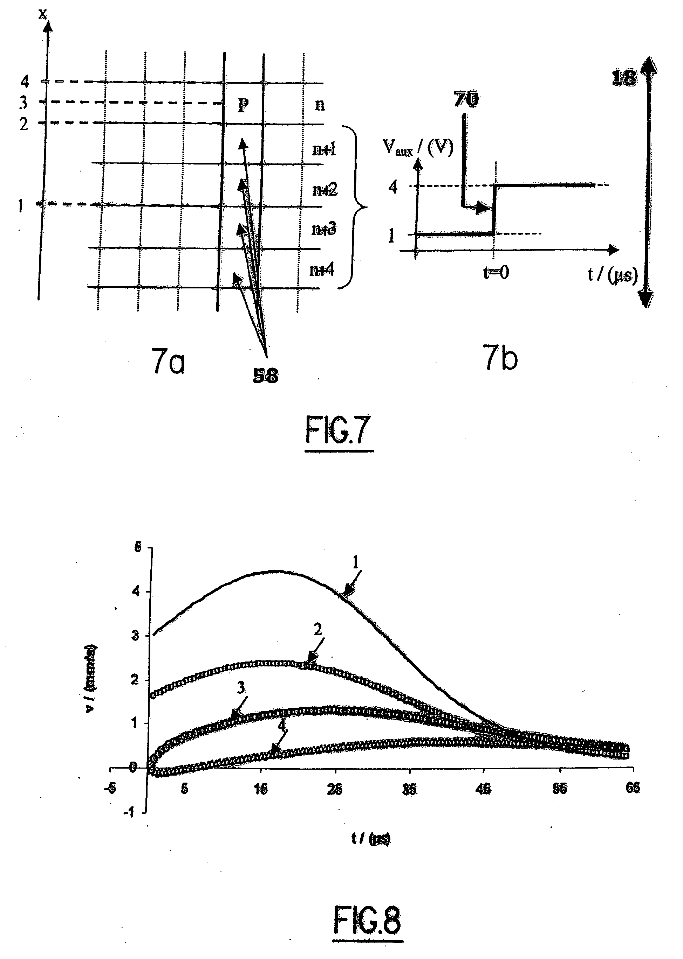

La figure 8 montre, en fonction du temps, la moyenne en z de la vitesse selon x du cristal liquide (v) en quatre points d'une cellule, ces quatre points étant répertoriés sur la figure 7a. Cet écoulement est créé par un signal auxiliaire Vaux formé d'un échelon de 3 volts ajouté à un signal constant de 1 volt comme illustré sur la figure 7b. L'échelon est appliqué simultanément sur 4 pixels voisins 58 contigus d'un pixel P situé sur la ligne n, dans une cellule de 1.5 µm d'épaisseur (figure 7) via les lignes correspondantes (n+1 à n+4).. Sur la figure 8, la courbe 1 donne la vitesse moyenne à une distance suffisamment éloignée du pixel P, par exemple à une distance de 2.5 pixels par rapport au centre du pixel P du côté des quatre pixels voisins recevant le signal auxiliaire. La courbe 2 donne la vitesse moyenne au bord du pixel P situé du côté des pixels voisins recevant le signal auxiliaire. La courbe 3 donne la vitesse moyenne au milieu du pixel P. La courbe 4 donne la vitesse moyenne du cristal liquide au bord du pixel P situé du côté opposé aux pixels voisins recevant le signal auxiliaire. La figure 8 est le résultat de simulations numériques.

Dans le pixel P, apparaît ainsi un écoulement auxiliaire de lever selon x induit par le lever des pixels voisins sous l'action de la montée du signal auxiliaire 70 (front montant). Cet écoulement s'atténue au fur et à mesure qu'il s'éloigne de sa source, et diffuse dans le pixel P depuis les pixels voisins où il est généré.

### b) effet de la descente

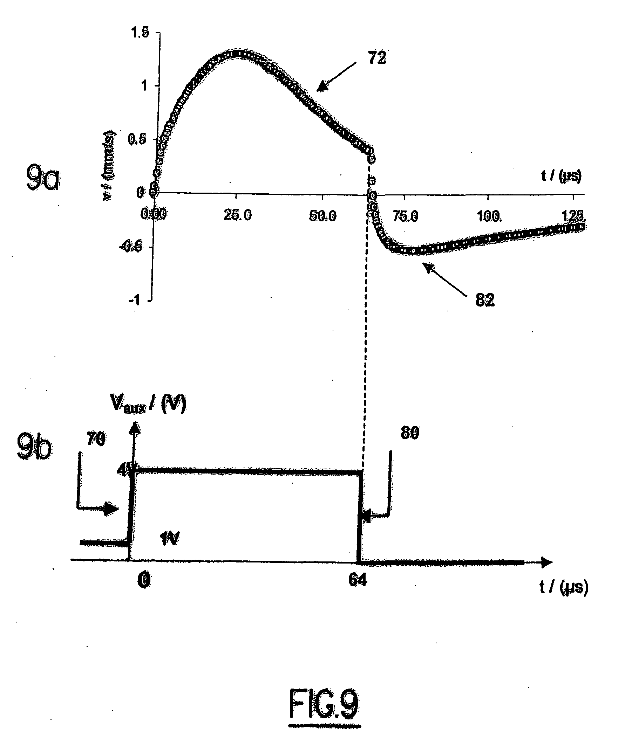

De la même manière, à l'arrêt brutal du signal auxiliaire (front descendant), un écoulement auxiliaire de chute est généré. La figure 9a montre en fonction du temps, la vitesse moyenne v induite au milieu du pixel P par un créneau auxiliaire Vaux appliqué sur les quatre pixels voisins précités. Le créneau de 4 volts formant le signal auxiliaire est appliqué pendant 64 µs sur les pixels voisins précités levés au préalable par un signal de 1 volt comme illustré sur la figure 9b.

Le pixel P voit d'abord un écoulement auxiliaire de lever 72 positif (selon x) déclenché par la montée 70 du signal auxiliaire, puis un écoulement auxiliaire de chute 82 négatif déclenché par la descente brutale 80 du signal auxiliaire. La vitesse induite au moment de l'arrêt du signal auxiliaire est plus faible en valeur absolue et de signe contraire (selon -x) à la vitesse induite au lever.

### c) effet de l'état de départ des pixels voisins

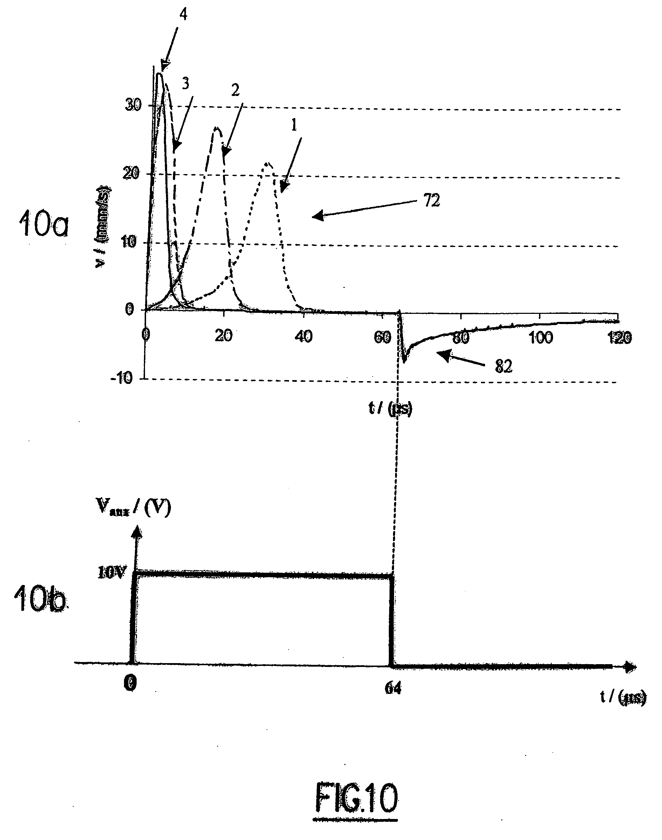

La figure 10a montre la vitesse moyenne au milieu des pixels voisins en fonction du temps pour plusieurs valeurs de la tension quadratique moyenne Vrms appliquée sur les pixels voisins avant l'application du signal auxiliaire illustré sur la figure 10b (courbe 1 : Vrms = 0V; courbe 2 : Vrms = 0,7 volt; courbe 3 : Vrms = 1 volt; courbe 4 Vrms = 1,4 volt). Le signal auxiliaire tel qu'illustré sur la figure 10b est un créneau de 10V et de durée 64µs appliqué sur les quatre pixels voisins 58 comme précédemment. La tension moyenne Vrms appliquée avant le signal auxiliaire a permis un lever préalable des molécules. Ce lever est fonction de la valeur de Vrms.

On constate qu'en fonction de Vrms, l'amplitude de la vitesse moyenne de l'écoulement auxiliaire de lever 72 au centre des pixels voisins varie mais surtout que l'instant du maximum de cette vitesse se décale sensiblement. Pour utiliser efficacement l'écoulement auxiliaire de lever 72, il faut tenir compte de ce phénomène et donc ajuster le décalage temporel entre la montée 70 du signal auxiliaire et le signal de commutation du pixel P.

On constate aussi que la vitesse moyenne de l'écoulement auxiliaire de chute 82 ne dépend pas de Vrms.

### d) sens de l'effet de l'écoulement auxiliaire

L'écoulement auxiliaire de lever, provoqué par le front montant du signal auxiliaire, est positif (selon x) et donc en sens contraire de l'écoulement de chute 32 près de la lame maître 20 dans le pixel P (selon -x), lequel écoulement de chute seul induirait le passage en T de celui-ci. L'écoulement auxiliaire de lever des pixels voisins s'oppose à l'écoulement de chute et favorise donc le passage en U du pixel P.

L'écoulement auxiliaire de chute provoqué par le front descendant du signal auxiliaire est négatif (selon -x), et donc dans le même sens que l'écoulement de chute 32 du pixel P, lequel écoulement de chute seul induirait le passage en T de celui-ci. L'écoulement auxiliaire de chute des pixels voisins aide donc le passage en T du pixel P.

### e) exemple d'efficacité de l'écoulement auxiliaire

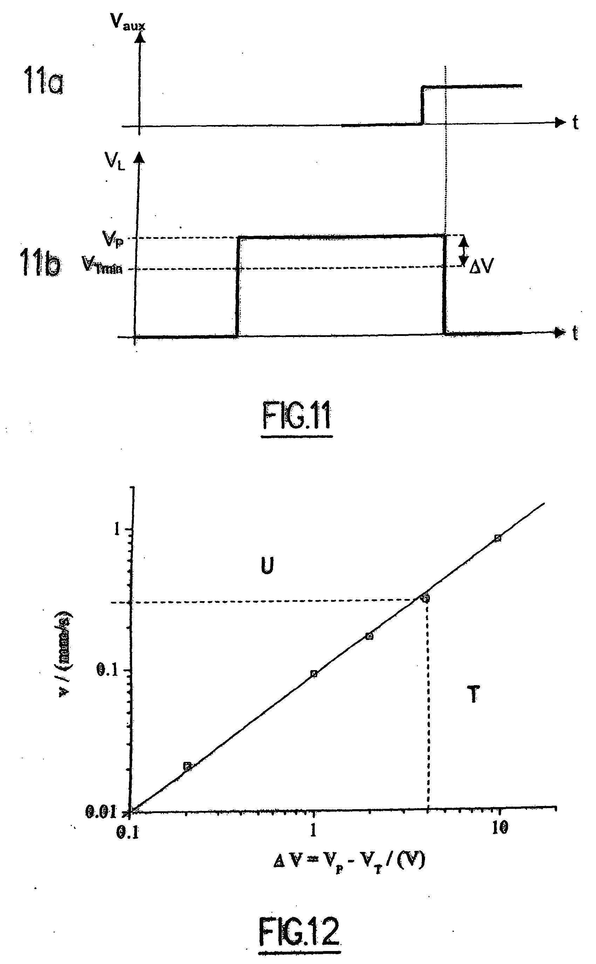

La figure 12 montre l'amplitude de l'écoulement auxiliaire de lever empêchant le passage en T du pixel P alors que la chute Vp à 0 est supérieure de ΔV à la chute nécessaire au passage en T sans signal auxiliaire V_{Tmin}.. On voit sur cette courbe l'efficacité du signal auxiliaire. Ici V_{Tmin} = 16V. Pour V_{P}=20 V, ΔV= 4V. La courbe figure 12 indique une vitesse de 0.3 mm/s pour bloquer le passage en T On a vu sur la figure 6 qu'une chute de tension Vp de 20 V crée un écoulement de -8mm/s. Celui-ci est ainsi contré par un écoulement auxiliaire de 0.3 mm/s.
Ainsi, le front montant du signal auxiliaire placé en avance (de quelques µs à quelques dizaines de µs à température ambiante et de quelques dizaines à centaines de µs à froid) par rapport au font descendant actif du signal Vp permet d'empêcher le passage en T et donc d'obtenir la texture U. Le front descendant de Vp actif est ici celui destiné à générer un écoulement de chute 32 suffisant pour obtenir la texture T,
De manière générale, l'ajustement de l'instant des fronts montant ou descendant du signal auxiliaire par rapport au front descendant actif du signal Vp (destiné à choisir la texture), permet de contrôler la texture finale dans l'ensemble du pixel P.

Lorsqu'au départ tous les pixels sont dans l'état U, des phénomènes de même type existent, mais ne seront pas détaillés ici afin de ne pas alourdir l'exposé.

La présente invention offre de nombreux avantages. Sans caractère limitatif on citera les avantages suivants :
1) pendant la deuxième étape d'un affichage passif en deux étapes, l'invention permet d'accélérer la deuxième étape et de contrôler des niveaux de gris.
2) lors de l'adressage en une étape ligne par ligne d'un ensemble de lignes (adressage en une étape), l'invention permet de maîtriser la commutation en U ou en T des pixels de la ligne activée.
3) pendant la deuxième étape d'un affichage passif en deux étapes, la première étape consistant en un passage collectif en T, l'invention permet une commutation rapide selon un mode original utilisant un signal pixel qui ne casse pas l'ancrage pour les pixels qui restent en T.

Nous développerons dans la suite de cet exposé trois exemples typiques et non limitatifs de mise en oeuvre de l'invention.

Ces exemples illustrent les avantages de l'invention au travers de trois de ses applications dans le cas particulier de l'afficheur BINEM®. Son application n'est pas limitée à ces cas, ni à ce type d'afficheur. En effet, il faut souligner que l'utilisation de l'écoulement auxiliaire créé par les pixels voisins en amont et en aval, révélé dans le cadre de la présente invention, peut être utile pour accélérer la commutation multiplexée des afficheurs cristaux liquides de tout type quand celle-ci est freinée par les écoulements.

### Exemple 1 de mise en oeuvre de l'invention : en adressage passif accélération de la deuxième étape d'un adressage en deux étapes et contrôle des niveaux de gris

Soit un écran ou quelques lignes d'un écran matriciel passif multiplexé, adressé en deux étapes. Les lignes 52 sont perpendiculaires au brossage, donc perpendiculaires aux écoulements induits par le mouvement des molécules (brossage orthogonal). On considère la deuxième étape de l'affichage : l'écran a été placé en texture T par la première étape dans la zone 100 à commuter. La commutation se fait sur la ligne n. On étudie la commutation du pixel P (ligne n, colonne m).

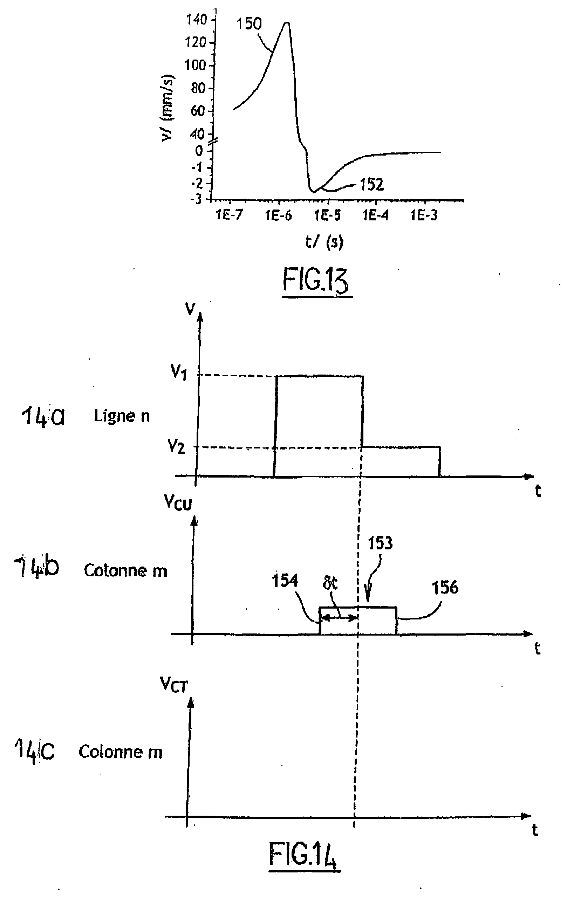

Au début de la commutation résultant, ici à titre d'exemple d'un créneau de tension appliqué sur une ligne n, le lever des molécules de la ligne n provoque un déplacement du cristal liquide de plus de 100 nm. Dans la configuration des molécules illustrée figures 2 et 7, le déplacement est vers les x positif. Ce déplacement crée près de la ligne n-1 une surpression et près de la ligne n+1 une dépression. Une fois l'état H obtenu, le gradient de pression créé fait revenir le cristal liquide. La figure 13 présente la vitesse moyenne au milieu du pixel P en fonction du temps pendant le lever par un échelon de 20 V appliqué au pixel P à l'instant t=0. Sur la figure 13 on a représenté en 150 l'écoulement de lever et en 152 l'écoulement de retour. Au départ une vitesse importante positive est constatée. Après quelques microsecondes l'écoulement devient négatif. Son effet ne s'amortit qu'au bout de plusieurs centaines de microsecondes. Pendant tout ce temps, l'écoulement dit de retour 152 incline les molécules près de la lame esclave 10 dans la direction de passage en texture T (négatif selon -x suivant nos conventions) : la texture U est impossible à obtenir.

Une méthode de commutation lente et imparfaite, sans utiliser l'invention, consiste à attendre la fin de l'écoulement de retour 152 sous tension, ce qui signifie élargir le premier plateau V'1 du signal de commutation pixel Vp (Vp = VL-Vc) à plus de 1ms environ à température ambiante. Ensuite une descente coupée en deux descentes équivalentes par un plateau intermédiaire donnera la texture U. Une descente coupée en deux descentes dissymétriques donnera la texture T. La valeur du deuxième plateau sur les différents pixels est ajustée au moyen du signal colonne Vc dont le front descendant est synchronisé avec le front descendant du deuxième plateau V'2 du signal ligne [6]. En fonction de la valeur de V'2, le front descendant actif est soit la transition V'1 à V'2, soit la transition V'2 à 0. Le temps du premier plateau est critique. S'il est trop court la texture U présente des états T parasites au milieu du pixel. S'il est trop long, la texture T présente les défauts de bord en U déjà cités.

La mise en oeuvre de l'invention permet de pallier les défauts ci-dessus. Pour cela on applique à la ligne n un signal classique mais plus rapide à deux plateaux : un premier plateau d'amplitude V1 assez forte pour casser l'ancrage, pendant le temps juste nécessaire pour cette cassure (typiquement < 1 ms), puis un second plateau V2 d'amplitude plus faible que la cassure. Nous choisissons ici à titre d'exemple le cas où le front descendant actif est le passage V1 à V2

Pour commuter le pixel P(n,m) en T on ne lui applique pas de signal colonne (V_{cT}=0) (cf figure 14c) pendant le temps d'activation de sa ligne n. L'écoulement de retour 152 aide l'écoulement de chute des molécules de la lame maître 20 au passage V1 à V2 pour faire commuter vers l'état T les molécules près de la lame esclave 10, sans aucun défaut sur les deux bords. Le passage V1 à V2 est bien le front descendant actif pour la commutation du pixel P.

Pour commuter le pixel P(n,m) en U, on applique sur sa colonne m un signal créneau auxiliaire 153 V_{cU} qui lève les molécules des pixels voisins (de la même colonne m) situés sur les lignes n+1, n+2, n-1, n-2 etc... (cf figure 14b). Le front auxiliaire montant 154 de ce signal 153 est ajusté temporellement pour que l'écoulement auxiliaire crée soit maximum au moment de la chute V1 à V2 du signal ligne. Le front auxiliaire montant 154 du signal auxiliaire 153 est donc en avance d'un temps δt sur le front descendant actif du pixel P (passage de V1 à V2) pour compenser le retard entre le signal auxiliaire 153 et l'écoulement qu'il induit dans la ligne n (cf figure 7 et 10). L'écoulement auxiliaire s'oppose à la fois à l'écoulement de retour et à l'écoulement de chute des molécules de la lame maître 20: même si la tension auxiliaire appliquée est plus faible que la tension de cassure pour ne pas risquer de faire commuter les pixels voisins des lignes n-1, n-2...déjà inscrits, l'écoulement auxiliaire compense l'écoulement de retour et l'écoulement de chute, et permet la commutation en U du pixel P. En fait, les pixels voisins en T contribuent principalement à l'écoulement auxiliaire, ce sont donc les pixels voisins n+1, n+2... mis en T par la première étape de l'adressage et éventuellement les pixels n-1, n-2 selon leur état après activation de leur ligne. Mais la contribution des n+1, n+2... est suffisante pour obtenir l'effet escompté.

Dans cet exemple non limitatif on remarque que le signal auxiliaire 153 n'est appliqué que par l'intermédiaire du signal colonne. Le signal colonne 153 appliqué dans ce mécanisme selon l'invention ne joue pas le rôle classique de contrôler la commutation du pixel P en changeant le saut de tension à ses bornes [1] [2] [6], car le signal colonne 153 selon l'invention n'est pas appliqué de manière à ce que son front descendant 156 soit synchronisé avec le front descendant du deuxième plateau V2 du signal ligne, ou désynchronisé par rapport à ce front descendant du deuxième plateau du signal ligne, selon la variante « modulation de phase » du document [9]. Selon l'invention, ce n'est pas le front descendant 156 du signal colonne 153 qui joue un rôle, mais son front montant 154, ce front montant auxiliaire 154 étant placé en avance par rapport au front descendant actif correspondant à la chute V1 à V2. De plus, le plateau V2 peut même être supprimé, le font descendant V1 à 0 devenant alors le front descendant actif Ainsi dans cette configuration selon l'invention, le signal colonne 153 reçu par le pixel P pendant le temps d'activation de sa ligne n'est donc pas le signal « pixel » classique mais un signal auxiliaire qui agit sur l'écoulement des pixels voisins et non directement sur P.

De plus les inventeurs ont montré que leur invention permet de contrôler un affichage en niveaux de gris simplement en faisant varier l'amplitude ou le placement temporel du signal auxiliaire 153. En effet, l'écoulement auxiliaire créé par les pixels en T des lignes n+1, n+2, etc. n'est pas uniforme dans tout le pixel de la ligne n. Il s'atténue en s'éloignant des pixels qui l'ont créé (cf figure 8). Pour une tension de colonne Vc comprise entre 0 et la valeur V_{cU} indiquée précédemment, l'écoulement auxiliaire est suffisant au bord de la ligne n près de la ligne n+1 pour s'opposer à l'écoulement de retour et à l'écoulement de chute et faire que la vitesse près de la lame esclave 10 soit inférieure à la vitesse seuil de passage en T. Cette partie du pixel commute en U. Au contraire dans la partie du pixel de la ligne n près de la ligne n-1, l'écoulement auxiliaire est trop faible pour s'opposer aux deux autres, la vitesse près de la lame esclave 10 est supérieure au seuil et cette partie du pixel commute en T. On obtient ainsi la coexistence des deux textures dans le pixel, qui est partagé en deux parties de chaque côté de la ligne où la vitesse, près de la lame esclave 10, est égale à la vitesse seuil de commutation en T. La place de la ligne de séparation est contrôlée par la vitesse de l'écoulement auxiliaire au moment de la chute V₁ à V₂, elle est ajustable en changeant l'amplitude du signal auxiliaire 153 ou la place temporelle de son front montant 154.

Selon une autre caractéristique avantageuse de l'invention, pour contrôler la commutation d'au moins une ligne d'affichage dans un état choisi, typiquement un état tordu T, le signal électrique auxiliaire est un signal appliqué sur au moins une ligne voisine, dont l'amplitude est inférieure à la tension de cassure d'ancrage et dont le front descendant est placé en coïncidence ou en avance d'un temps contrôlé par rapport au front descendant actif du signal électrique de commande.

Selon une autre variante conforme à la présente invention, pour contrôler la commutation d'au moins une ligne d'affichage dans un état choisi, typiquement un état tordu T, le signal électrique auxiliaire est un signal appliqué sur plusieurs lignes voisines, dont l'amplitude est inférieure à la tension de cassure d'ancrage et dont le front descendant est placé en coïncidence ou en avance d'un temps contrôlé par rapport au front descendant actif du signal de commande.

Pour l'ensemble des signaux décrits pour cette invention, les signaux lignes et colonnes peuvent être soit monopolaires soit bipolaires, tels que décrits par exemple dans le document [6]. La tension de référence n'est pas nécessairement égale à 0 volts, certains drivers d'écrans fonctionnant avec une masse virtuelle.

L'ensemble des exemples décrits peuvent être combinés entre eux.

Les exemples précédents peuvent être appliqués à un adressage actif, avec plus de liberté du fait de l'indépendance des signaux colonnes appliqués aux pixels d'une même colonne mais de lignes différentes.

### Documents cités

Doc [1] : US 6327017
Doc [2] : I.Dozov et al, "Recent improvements of bistable nematic displays switched by anchoring breaking (BiNem)", Proceeding SID 2001, p 224-227
Doc [3] :P. Martinot Lagarde et al, SPIE vol. 5003 (2003), p25-34
Doc [4]: M.Giocondo, I.Letidis, I.Dozov, G.Durand, Eur. Phys. J.AP5, 227 (1999)
Doc [5] : : I. Dozov, Ph. Martinot-Lagarde, Phys. Rev. E., 58, 7442 (1998).
Doc [6] : FR 2 835 644
Doc[7] : US 2006-0022919
Doc [8] : US 7067180
Doc [9] : WO 2004/104980

## Revendications

1. Procédé de commande d'un afficheur à cristal liquide nématique bistable à cassure d'ancrage à adressage actif, ledit afficheur comprenant deux textures cristal liquide stables, l'une uniforme ou faiblement tordue (U) dans laquelle les molécules sont sensiblement parallèles entre elles et l'autre à torsion (T) qui diffère de la première par une torsion d'environ +/- 180° à +/- 15° près et comprenant une matrice de pixels agencés en lignes, indice n, et en colonnes, indice m, croisées, chaque pixel (P, n, m) étant situé à l'intersection d'une ligne n et d'une colonne m, et dans lequel une commutation d'état des molécules de cristal liquide d'un pixel P vers une texture choisie pouvant être uniforme ou faiblement tordue (U), ou à torsion (T), ou une coexistence des deux textures définissant un niveau de gris, est pilotée par application d'un signal électrique de commande entre deux électrodes encadrant chaque pixel comprenant une tension supérieure à la tension de cassure d'ancrage puis un front descendant actif permettant l'obtention de ladite texture choisie, fait intervenir un écoulement selon une direction déterminée (18) proche de la direction de brossage (40), ladite direction de brossage de l'afficheur étant perpendiculaire aux lignes, l'adressage des pixels étant en deux étapes constituées d'une première étape dans laquelle on effectue de manière collective l'adressage d'au moins une partie de l'écran dans la texture unique à torsion (T) suivie d'une deuxième étape d'adressage ligne à ligne de ladite partie de l'écran, **caractérisé par le fait qu'**il comprend, pour contrôler la commutation de certains au moins des pixels (P,n,m), une étape consistant à appliquer sur au moins un pixel (58) voisin selon la direction d'écoulement d'un pixel (P,n,m) dont la commutation doit être contrôlée par le signal électrique de commande, ledit pixel voisin (n+1, m) étant situé sur la même colonne m que le pixel (P,n,m) à commuter et sur la ligne suivante, des signaux électriques auxiliaires correspondants à des signaux appliqués sur l'électrode de colonne m, adaptés pour induire dans ledit pixel voisin un écoulement auxiliaire parallèle à ladite direction (18), lesdits signaux auxiliaires étant appliqués lors de la deuxième étape d'adressage de la ligne n du pixel (P,n,m) à commuter vers une texture choisie, et dont les fronts montants ou descendants sont temporellement placés en avance ou en coïncidence par rapport au front descendant actif du signal électrique de commande du pixel (P), avec un décalage temporel compris entre 0 et quelques dizaines de microsecondes, à température ambiante, de manière à favoriser la commutation vers une texture choisie dudit pixel à contrôler(P)

2. Procédé selon la revendication 1, **caractérisé par le fait que** lesdits signaux électriques auxiliaires sont appliqués simultanément sur plusieurs pixels voisins (58).

3. Procédé selon l'une des revendications 1 à 2 **caractérisé par le fait que** pour favoriser une commutation d'un pixel (P) dans un état uniforme ou faiblement tordu (U), le front montant des signaux électriques auxiliaires est placé temporellement en avance par rapport au front actif descendant du signal électrique de commande.

4. Procédé selon l'une des revendications 1 à 3 **caractérisé par le fait que** pour favoriser une commutation d'un pixel (P) dans un état tordu (T), le front descendant des signaux électriques auxiliaires est placé temporellement en coïncidence ou en avance par rapport au front descendant actif du signal électrique de commande.

5. Procédé selon l'une des revendications 1 à 4, **caractérisé par le fait que** le décalage temporel d'un front des signaux électriques auxiliaires par rapport au front descendant actif du signal électrique de commande est compris typiquement entre 0 et 50 µs, de préférence entre 0 et 10 µs, très préférentiellement entre 5 µs et 10 µs.

6. Procédé selon l'une des revendications 1 à 5 **caractérisé par le fait que** lors de la deuxième étape l'on applique sur le pixel à contrôler un signal comprenant deux plateaux : un premier plateau dont l'amplitude est assez forte pour casser l'ancrage suivi d'un deuxième plateau dont l'amplitude est plus faible que la tension de cassure d'ancrage, et les signaux électriques auxiliaires sont appliqués sur les électrodes de colonne sous forme d'un signal nul pour obtenir un état tordu (T) et sous forme d'un signal en créneau dont le front montant est placé en avance par rapport au front actif descendant intermédiaire entre les deux plateaux du signal de commande pour obtenir un état uniforme ou faiblement tordu (U).

7. Procédé selon la revendication 6 **caractérisé par le fait que** le signal électrique auxiliaire est également appliqué sur les pixels voisins des lignes non encore inscrites voisines (n+1 ou n+1 et n+2) de la ligne à contrôler.

8. Procédé selon l'une des revendications 1 à 7 **caractérisé par le fait que** l'on contrôle des niveaux de gris par contrôle de l'amplitude et/ou du décalage temporel des signaux électriques auxiliaires par rapport au front descendant actif du signal électrique de commande.

9. Afficheur à cristal liquide nématique bistable à cassure d'ancrage à adressage actif, comprenant deux textures cristal liquide stables, l'une uniforme ou faiblement tordue (U) dans laquelle les molécules sont sensiblement parallèles entre elles et l'autre à torsion (T) qui diffère de la première par une torsion d'environ +/- 180° à +/- 15° près et comprenant une matrice de pixels agencés en lignes, indice n, et en colonnes, indice m, croisées, chaque pixel (P,n,m) étant situé à l'intersection d'une ligne n et d'une colonne m, et dans lequel une commutation d'état des molécules de cristal liquide d'un pixel P vers une texture choisie pouvant être uniforme ou faiblement tordue (U), ou à torsion (T), ou une coexistence des deux textures définissant un niveau de gris est pilotée par application d'un signal électrique de commande entre deux électrodes encadrant chaque pixel comprenant une tension supérieure à la tension de cassure d'ancrage puis un front descendant actif permettant l'obtention de ladite texture choisie, ladite commutation faisant intervenir un écoulement selon une direction déterminée (18) proche de la direction de brossage (40), ladite direction de brossage de l'afficheur étant perpendiculaire aux lignes, l'adressage des pixels étant en deux étapes constituées d'une première étape dans laquelle on effectue de manière collective l'adressage d'au moins une partie de l'écran dans la texture unique à torsion (T) suivie d'une deuxième étape d'adressage ligne à ligne de ladite partie de l'écran, **caractérisé par le fait qu'**il comprend pour contrôler la commutation de certains au moins des pixels (P,n,m), des moyens appliquant sur au moins un pixel (58) voisin, selon la direction d'écoulement, d'un pixel (P,n,m) dont la commutation doit être contrôlée par le signal électrique de commande, ledit pixel voisin (n+l,m) étant situé sur la même colonne m que le pixel P(n,m) à commuter et sur la ligne suivante, des signaux électriques auxiliaires correspondants à des signaux appliqués sur l'électrode de colonne m, adaptés pour induire dans ledit pixel voisin un écoulement auxiliaire parallèle à ladite direction (18), lesdits signaux auxiliaires étant appliqués lors de la deuxième étape d'adressage de la ligne n du pixel (P,n,m) à commuter vers une texture choisie, et dont les fronts montant ou descendant sont temporellement placés en avance ou en coïncidence par rapport au front descendant actif du signal électrique de commande du pixel P, avec un décalage temporel compris entre 0 et quelques dizaines de microsecondes, à température ambiante, de manière à favoriser la commutation vers une texture choisie dudit pixel à contrôler(P).

## Patentansprüche

1. Verfahren zum Steuern einer bistabilen nematischen Flüssigkristallanzeige mit Ankerbruch und aktiver Adressierung, wobei die Anzeige Folgendes umfasst: zwei stabile Flüssigkristalltexturen, die eine gleichförmig oder geringfügig verdreht (U), bei der die Moleküle im Wesentlichen parallel zueinander sind, und die andere mit einer Verdrehung (T), die sich von der ersten um eine Verdrehung von etwa +/- 180° plus oder minus +/-15° unterscheidet, und eine Matrix von Pixeln umfasst, die in gekreuzten Reihen mit Index N und Spalten mit Index M angeordnet sind, wobei sich jedes Pixel (P, n, m) am Schnittpunkt einer Reihe n und einer Spalte m befindet, und wobei das Umschalten eines Zustands der Flüssigkristallmoleküle von einem Pixel P auf eine gewählte Textur gleichförmig oder geringfügig verdreht (U) sein oder eine Verdrehung (T) haben kann, oder die Koexistenz der beiden Texturen, die eine Graustufe definieren, wird gesteuert durch Anlegen eines elektrischen Steuersignals zwischen zwei jedes Pixel umrahmenden Elektroden, das eine Spannung über der Ankerbruchspannung umfasst, dann bewirkt eine aktive abfallende Flanke, die die Erzielung der gewählten Textur zulässt, einen Strom in einer bestimmten Richtung (18) nahe an der Bürstrichtung (40), wobei die Bürstrichtung der Anzeige lotrecht zu den Reihen ist, wobei die Adressierung der Pixel in zwei Schritten erfolgt, bestehend aus einem ersten Schritt, bei dem die Adressierung kollektiv von wenigstens einem Teil des Bildschirms in der einzigen Verdrehtextur (T) erfolgt, gefolgt von einem zweiten Schritt einer reihenweisen Adressierung des Teils des Bildschirms, **dadurch gekennzeichnet, dass** es zum Steuern der Umschaltung von wenigstens einigen der Pixel (P, n, m) einen Schritt beinhaltet, der im Anlegen, an wenigstens ein Nachbarpixel (58) entlang der Fließrichtung eines Pixels (P, n, m), dessen Umschaltung mit dem elektrischen Steuersignal gesteuert werden muss, wobei sich das Nachbarpixel (n+1, m) auf derselben Spalte m wie das zu schaltende Pixel (P, n, m) und in der nächsten Reihe befindet, von elektrischen Zusatzsignalen besteht, die an die Elektrode von Spalte m angelegten Signalen entsprechen, die so abgestimmt sind, dass in dem Nachbarpixel ein Zusatzfluss parallel zu der Richtung (18) induziert wird, wobei die Zusatzsignale während des zweiten Schrittes des Adressierens der Reihe n des zu schaltenden Pixels (P, n, m) an eine gewählte Textur angelegt werden, und deren ansteigende oder abfallende Flanken zeitlich vor oder in Koinzidenz mit der aktiven abfallenden Flanke des elektrischen Steuersignals des Pixels (P) gesetzt werden, mit einer Zeitverschiebung zwischen 0 und einigen Dutzend Mikrosekunden bei Umgebungstemperatur, um die Umschaltung des zu steuernden Pixels (P) auf eine gewählte Textur zu begünstigen.

2. Verfahren nach Anspruch 1, **dadurch gekennzeichnet, dass** die elektrischen Zusatzsignale gleichzeitig an mehrere Nachbarpixel (58) angelegt werden.

3. Verfahren nach einem der Ansprüche 1 bis 2, **dadurch gekennzeichnet, dass** zum Begünstigen des Umschaltens eines Pixels (P) in einen gleichförmigen oder geringfügig verdrehten (U) Zustand, die ansteigende Flanke der elektrischen Zusatzsignale zeitlich vor die abfallende aktive Flanke des elektrischen Steuersignals gesetzt wird.

4. Verfahren nach einem der Ansprüche 1 bis 3, **dadurch gekennzeichnet, dass** zum Begünstigen des Umschaltens eines Pixels (P) in einen verdrehten Zustand (T) die abfallende Flanke der elektrischen Zusatzsignale zeitlich in Koinzidenz mit oder vor die aktive abfallende Flanke des elektrischen Steuersignals gesetzt wird.

5. Verfahren nach einem der Ansprüche 1 bis 4, **dadurch gekennzeichnet, dass** die Zeitverschiebung einer Flanke der elektrischen Zusatzsignale relativ zu der aktiven abfallenden Flanke des elektrischen Steuersignals typischerweise zwischen 0 und 50 µs, vorzugsweise zwischen 0 und 10 µs und am meisten bevorzugt zwischen 5 µs und 10 µs liegt.

6. Verfahren nach einem der Ansprüche 1 bis 5, **dadurch gekennzeichnet, dass** während des zweiten Schrittes ein zwei Plateaus aufweisendes Signal an das zu steuernde Pixel angelegt wird: ein erstes Plateau, dessen Amplitude hoch genug ist, um den Anker zu brechen, gefolgt von einem zweiten Plateau, dessen Amplitude schwächer ist als die Ankerbruchspannung, und die elektrischen Zusatzsignale an die Spaltenelektroden in Form eines Null-Signals angelegt werden, um einen verdrehten Zustand (T) zu erhalten, und in Form eines Burstsignals, dessen ansteigende Flanke vor die zwischenliegende aktive abfallende Flanke zwischen den beiden Plateaus des Steuersignals gesetzt wird, um eine gleichförmige oder geringfügig verdrehte Form (U) zu erhalten.

7. Verfahren nach Anspruch 6, **dadurch gekennzeichnet, dass** das elektrische Zusatzsignal auch an die Pixel neben noch nicht aufgezeichneten Reihen (n+1 oder n+1 und n+2) neben der zu steuernden Reihe angelegt wird.

8. Verfahren nach einem der Ansprüche 1 bis 7, **dadurch gekennzeichnet, dass** die Graustufen durch Regeln der Amplitude und/oder der Zeitverschiebung der elektrischen Zusatzsignale relativ zur aktiven abfallenden Flanke des elektrischen Steuersignals gesteuert werden.

9. Bistabile nematische Flüssigkristallanzeige mit Ankerbruch und aktiver Adressierung, umfassend zwei stabile Flüssigkristalltexturen, die eine gleichförmig oder geringfügig verdreht (U), bei der die Moleküle im Wesentlichen parallel zueinander sind, und die andere mit einer Verdrehung (T), die sich von der ersten um eine Verdrehung von etwa +/- 180° plus oder minus +/-15° unterscheidet, und eine Matrix von Pixeln umfassend, die in gekreuzten Reihen mit Index n und Spalten mit Index m angeordnet sind, wobei sich jedes Pixel (P, n, m) am Schnittpunkt einer Reihe n und einer Spalte m befindet, und wobei die Umschaltung von einem Zustand der Flüssigkristallmoleküle von einem Pixel P zu einer gewählten Textur gleichförmig oder geringfügig verdreht (U) sein oder eine Verdrehung (T) haben kann, oder eine Koexistenz der zwei Texturen, die eine Graustufe definieren, wird gesteuert durch Anlegen eines elektrischen Steuersignals zwischen zwei jedes Pixel umrahmenden Elektroden, das eine Spannung hat, die höher ist als die Ankerbruchspannung, dann eine aktive abfallende Flanke, die die Erzielung der gewählten Struktur zulässt, wobei die Umschaltung einen Fluss in einer bestimmten Richtung (18) nahe der Bürstrichtung (40) bewirkt, wobei die Bürstrichtung der Anzeige lotrecht zu den Reihen ist, wobei die Adressierung der Pixel in zwei Schritten erfolgt, bestehend aus einem ersten Schritt, bei dem die Adressierung kollektiv an wenigstens einem Teil des Bildschirms in der einzigen Verdrehtextur (T) erfolgt, gefolgt von einem zweiten Schritt einer reihenweisen Adressierung des Teils des Bildschirms, **dadurch gekennzeichnet, dass** sie, zum Steuern des Umschaltens von wenigstens einigen der Pixel (P, n, m), Mittel zum Anwenden, auf wenigstens ein Nachbarpixel (58), entlang der Fließrichtung, eines Pixels (P, n, m) umfasst, dessen Umschaltung mit dem elektrischen Steuersignal gesteuert werden muss, wobei sich das Nachbarpixel (n+1, m) auf derselben Spalte m befindet wie das zu schaltende Pixel (P, n, m), und in der nächsten Reihe elektrische Zusatzsignale, die Signalen entsprechen, die an die Elektrode von Spalte m angelegt werden, die so abgestimmt sind, dass in dem Nachbarpixel ein Zusatzfluss parallel zu der Richtung (18) induziert wird, wobei die Zusatzsignale während des zweiten Schrittes des Adressierens der Reihe n des zu schaltenden Pixels (P, n, m) auf eine gewählte Textur angelegt werden, und deren ansteigende oder abfallende Flanken zeitlich vor oder auf die aktive abfallende Flanke des elektrischen Steuersignals des Pixels P gesetzt werden, mit einer Zeitverschiebung zwischen 0 und ein paar Dutzend Mikrosekunden bei Umgebungstemperatur, um die Umschaltung des zu steuernden Pixels (P) auf eine gewählte Textur zu begünstigen.

## Claims

1. A method for controlling a bistable anchoring-breaking, active-addressing nematic liquid crystal display, said display comprising two stable liquid crystal textures, with one of said textures being uniform or slightly twisted (U), in which the molecules are substantially parallel to each other, and the other of said textures having a twist (T) that differs from the first by a twist of approximately +/- 180° plus or minus +/-15°, and comprising a matrix of pixels arranged in crossed lines, index n, and columns, index m, with each pixel (P, n, m) being located at the intersection of a line n and a column m, and in which the switching of a state of the liquid crystal molecules from a pixel P to a selected texture that can be uniform or slightly twisted (U) or with a twist (T) or a coexistence of the two textures defining a grey scale, is controlled by the application of an electrical control signal between two electrodes framing each pixel, which electrical control signal comprises a voltage greater than the anchoring-breaking voltage, then an active falling edge that allows said selected texture to be obtained effects a flow in a determined direction (18) close to the sweeping direction (40), with said sweeping direction of the display being perpendicular to the lines, with the addressing of the pixels being in two steps comprised of a first step in which the addressing is collectively undertaken of at least part of the screen in the sole twist texture (T), followed by a second step of line-by-line addressing of said part of the screen, **characterised in that** it comprises, in order to control the switching of at least some of the pixels (P, n, m), a step comprising the application of, on at least one neighbouring pixel (58) along the direction of flow of a pixel (P, n, m), the switching of which must be controlled by the electrical control signal, with said neighbouring pixel (n+1, m) being located on the same column m as the pixel (P, n, m) to be switched and on the next line, auxiliary electrical signals corresponding to signals applied to the electrode of column m, matched so as to induce in said neighbouring pixel an auxiliary flow parallel to said direction (18), with said auxiliary signals being applied during the second step of addressing the line n of the pixel (P, n, m) to be switched to a selected texture, and the rising or falling edges of which are temporally placed in front of or coinciding with the active falling edge of the electrical control signal of the pixel (P), with a time shift between 0 and a few tens of microseconds, at ambient temperature, so as to favour the switching of said pixel to be controlled (P) to a selected texture.

2. The method according to claim 1, **characterised in that** said auxiliary electrical signals are applied simultaneously to a plurality of neighbouring pixels (58).

3. The method according to any one of claims 1 to 2, **characterised in that** in order to favour the switching of a pixel (P) in a uniform or slightly twisted (U) state, the rising edge of the auxiliary electrical signals is temporally placed in front of the falling active edge of the electrical control signal.

4. The method according to any one of claims 1 to 3, **characterised in that** in order to favour the switching of a pixel (P) in a twisted state (T), the falling edge of the auxiliary electrical signals is temporally placed coinciding with or in front of the active falling edge of the electrical control signal.

5. The method according to any one of claims 1 to 4, **characterised in that** the time shift of an edge of the auxiliary electrical signals relative to the active falling edge of the electrical control signal is typically between 0 and 50 µs, preferably between 0 and 10 µs, and most preferably between 5 µs and 10 µs.

6. The method according to any one of claims 1 to 5, **characterised in that** during the second step a signal comprising two plateaus is applied to the pixel to be controlled: a first plateau for which the amplitude is high enough to break the anchoring, followed by a second plateau for which the amplitude is weaker than the anchoring-breaking voltage, and the auxiliary electrical signals are applied to the column electrodes in the form of a zero signal in order to obtain a twisted state (T), and in the form of a colorburst signal, the rising edge of which is placed in front of the intermediate active falling edge between the two plateaus of the control signal so as to obtain a uniform or slightly twisted shape (U).

7. The method according to claim 6, **characterised in that** the auxiliary electrical signal is also applied to the neighbouring pixels of neighbouring lines not yet recorded (n+1 or n+1 and n+2) of the line to be controlled.

8. The method according to any one of claims 1 to 7, **characterised in that** grey scales are controlled by controlling the amplitude and/or the time shift of the auxiliary electrical signals relative to the active falling edge of the electrical control signal.

9. A bistable anchoring-breaking active-addressing nematic liquid crystal display, comprising two stable liquid crystal textures, with one of said textures being uniform or slightly twisted (U) in which the molecules are substantially parallel to each other and with the other one of said textures having a twist (T) that differs from the first by a twist of approximately +/- 180° plus or minus +/-15°, and comprising a matrix of pixels arranged in crossed lines, index n, and columns, index m, with each pixel (P, n, m) being located at the intersection of a line n and a column m, and wherein the switching of a state of the liquid crystal molecules from a pixel P to a selected texture that can be uniform or slightly twisted (U) or with a twist (T), or a coexistence of the two textures defining a grey scale, is controlled by the application of an electrical control signal between two electrodes framing each pixel, which electrical control signal comprises a voltage greater than the anchoring-breaking voltage, then an active falling edge allowing said selected texture to be obtained, said switching effecting a flow in a determined direction (18) close to the sweeping direction (40), with said sweeping direction of the display being perpendicular to the lines, with the addressing of the pixels being in two steps comprised of a first step in which the addressing is collectively undertaken of at least part of the screen in the sole twist texture (T), followed by a second step of line-by-line addressing of said part of the screen, **characterised in that** it comprises, in order to control the switching of at least some of the pixels (P, n, m), means applying to at least one neighbouring pixel (58), along the direction of flow, a pixel (P, n, m) for which the switching must be controlled by the electrical control signal, with said neighbouring pixel (n+1, m) being located on the same column m as the pixel P(n, m) to be switched and on the next line, auxiliary electrical signals corresponding to signals applied to the electrode of column m, matched so as to induce in said neighbouring pixel an auxiliary flow parallel to said direction (18), with said auxiliary signals being applied during the second step of addressing the line n of the pixel (P, n, m) to be switched to a selected texture, and the rising or falling edges of which are temporally placed in front of or coinciding with the active falling edge of the electrical control signal of the pixel P, with a time shift of between 0 and a few tens of microseconds, at ambient temperature, so as to favour the switching of said pixel to be controlled (P) to a selected texture.
